# FASCICULE DE BREVET EUROPEEN

(11) **EP 0 751 322 B1**
(45) Date de publication et mention de la délivrance du brevet: **07.01.1999**
(21) Numéro de dépôt: 96401279.3
(22) Date de dépôt: 12.06.1996
(51) Int. Cl.: F16H 59/02, F16H 61/28, F16H 61/36

(54) **Dispositif de commande d'une boîte de vitesses pour véhicule automobile**
Fahrzeug-Gangschalthebel mit Kraftaufnehmer
Vehicle gear selector lever with force sensor

(30) Priorité: 26.06.1995 FR 9507660
(43) Date de publication de la demande: 02.01.1997
(73) Titulaire: AUTOMOBILES PEUGEOT, 75116 Paris (FR); AUTOMOBILES CITROEN, 92200 Neuilly-sur-Seine (FR)
(72) Inventeur: Froumajou, Armand, 95110 Sannois (FR)
(74) Mandataire: Moncheny, Michel

(56) Documents cités:
- EP-A- 0 251 807
- DE-A- 3 339 591
- FR-A- 2 713 564
- GB-A- 2 127 180
- GB-A- 2 253 250
- GB-A- 2 270 143
- PATENT ABSTRACTS OF JAPAN vol. 017, no. 130 (M-1382), 18 Mars 1993 & JP-A-04 310433 (MEIDENSHA CORP), 2 Novembre 1992,
- PATENT ABSTRACTS OF JAPAN vol. 018, no. 677 (M-1727), 20 Décembre 1994 & JP-A-06 265017 (KUBOTA CORP), 20 Septembre 1994,

## Description

La présente invention concerne un dispositif de commande d'une boîte de vitesses pour véhicule automobile.

On connaît déjà dans l'état de la technique un dispositif de commande d'une boîte de vitesses pour véhicule automobile, du type comprenant un levier de changement de vitesses monté articulé sur la caisse du véhicule, déplaçable suivant au moins une direction, dite longitudinale, de passage de rapports de la boîte de vitesses.

La sélection des différents rapports de la boîte de vitesses se fait habituellement, soit en déplaçant le levier suivant une direction sensiblement perpendiculaire à la précédente, dite transversale, soit en déplaçant suivant cette direction transversale un pommeau articulé sur le levier autour d'un axe sensiblement longitudinal. Ce dernier cas est décrit par exemple dans FR-A-2 713 564 (FR-A-93 15 012).

Le passage d'un rapport implique habituellement la commande d'un synchroniseur, ce qui requiert d'exercer un effort relativement important sur le levier de changement de vitesses. Afin de limiter cet effort, il est nécessaire de prévoir une amplitude des déplacements longitudinaux du levier relativement importante permettant la démultiplication de l'effort exercé sur ce dernier.

GB-A-2 270 143 décrit un dispositif de commande d'une boîte de vitesses pour véhicule automobile, du type comprenant un levier de changement de vitesses monté articulé sur la caisse du véhicule, déplaçable suivant au moins une direction, dite longitudinale, de passage de rapports de la boîte de vitesses, des moyens d'appui du levier compressibles élastiquement sous l'effet des déplacements longitudinaux avant ou arrière du levier, des moyens de détection de l'effort exercé par le levier sur les moyens d'appui de celui-ci, lors du passage d'un rapport, et des moyens d'assistance au passage du rapport actionnés lorsque ledit effort atteint ou dépasse un seuil prédéterminé de compression des moyens d'appui, les moyens de détection d'effort comprenant des moyens contacteurs électriques de pilotage des moyens d'assistance, actionnés à partir du seuil de compression.

L'invention a pour but de pouvoir réduire l'amplitude des déplacements longitudinaux du levier et de limiter l'effort que doit fournir l'utilisateur pour passer un rapport de la boîte de vitesses.

A cet effet l'invention a pour objet un premier dispositif de commande d'une boîte de vitesses pour véhicule automobile, du type décrit dans GB-A-2 270 143, caractérisé en ce que le levier de changement de vitesses est monté articulé autour d'un axe transversal sur un support monté coulissant longitudinalement sur la caisse du véhicule, les moyens d'appui compressibles comprenant deux butées d'appui avant et arrière en élastomère solidaires de la caisse du véhicule, entre lesquelles est interposé le support mobile, les moyens contacteurs comprenant un contacteur à poussoir associé à chaque sens avant ou arrière de déplacement du levier et solidaire de la caisse, actionné par une butée-poussoir correspondante reliée au levier.

Suivant des caractéristiques de différents modes de réalisation de ce premier dispositif :
- le support est monté pivotant autour d'un axe de coulissement longitudinal, de manière que le levier de changement de vitesses soit déplaçable également suivant une direction, dite transversale, de sélection de rapports de la boîte de vitesses ;
- le support comporte deux pivots longitudinaux avant et arrière montés coulissants sur la caisse du véhicule, les butées d'appui étant annulaires et entourant les pivots, les contacteurs étant alignés avec les pivots et actionnés par les extrémités de ces pivots ;

L'invention a également pour objet un second dispositif de commande d'une boîte de vitesses pour véhicule automobile, du type décrit dans GB-A-2 270 143, et selon les caractéristiques de la revendication indépendante 4.

Suivant une autre caractéristique de ce second dispositif, un premier élément articulé comporte une chape prismatique munie de deux côtés opposés longitudinaux d'articulation des éléments et de deux côtés transversaux, adjacents aux précédents, portant les butées d'appui et les contacteurs, les butées d'appui étant annulaires et entourant les poussoirs des contacteurs.

Suivant d'autres caractéristiques de ces premier et second dispositifs :
- les moyens d'assistance comprennent un vérin actionné par des moyens électriques ou fluidiques, muni d'une tige de poussée/traction reliée à l'extrémité résistante du levier ;
- le levier de changement de vitesses est articulé sur un boîtier solidaire de la caisse du véhicule et portant les moyens de détection d'effort et les moyens d'assistance.

L'invention sera mieux comprise à la lecture de la description qui va suivre donnée uniquement à titre d'exemple et faite en se référant aux dessins annexés dans lesquels :
- la figure 1 est une vue schématique en coupe longitudinale d'un dispositif de commande d'une boîte de vitesses selon un premier mode de réalisation de l'invention;
- la figure 2 est une vue en perspective de moyens d'articulation du levier de changement de vitesses représenté à la figure 1 ;
- la figure 3 est une vue schématique en coupe longitudinale d'un dispositif de commande d'une boîte de vitesses selon un second mode de réalisation de l'invention ;
- la figure 4 est une vue en perspective de moyens d'articulation du levier de changement de vitesses représenté à la figure 3 ;
- la figure 5 est une vue schématique en coupe longitudinale d'un dispositif de commande d'une boîte de vitesses selon un troisième mode de réalisation de l'invention ;
- la figure 6 est une vue en perspective du bras résistant du levier de changement de vitesses représenté à la figure 5.

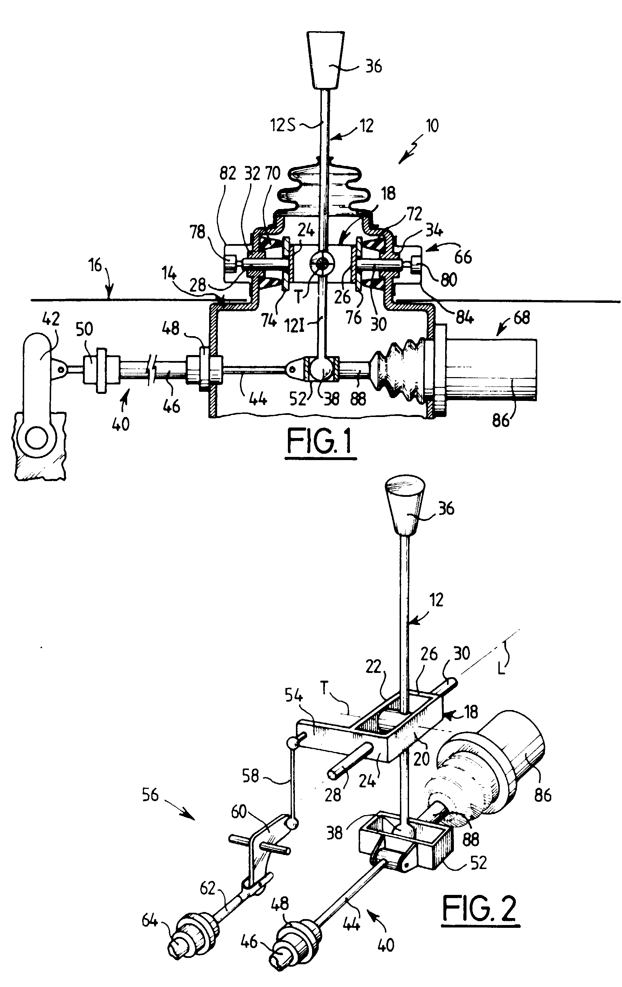

On a représenté sur les figures 1 et 2 un dispositif de commande d'une boîte de vitesses pour véhicule automobile, selon un premier mode de réalisation de l'invention, désigné par la référence générale 10.

Le dispositif de commande 10 comporte un levier de changement de vitesses 12 porté par un boîtier 14 fixé de façon connue en soi sur le plancher 16 de la caisse du véhicule, de manière que le levier 12 soit accessible à l'intérieur de l'habitacle du véhicule.

Le levier de changement de vitesses 12 est déplaçable suivant une direction, dite transversale, de sélection de rapports de la boîte de vitesses et suivant une direction sensiblement perpendiculaire à la précédente, dite longitudinale, de passage de rapports de la boîte de vitesses.

Le levier de changement de vitesses 12 est articulé sur le boîtier 14 au moyen d'un montage à la Cardan.

Ce montage comprend un support prismatique 18 formant chape comportant deux côtés longitudinaux opposés 20,22, sur lesquels est articulé le levier 12 autour d'un axe transversal T, et deux côtés transversaux 24,26 adjacents aux précédents portant respectivement deux pivots longitudinaux avant 28 et arrière 30 montés coulissants dans des paliers 32,34 portés par le boîtier 14.

Le levier de changement de vitesses 12 peut donc pivoter autour de l'axe transversal T et d'un axe longitudinal L matérialisé par les deux pivots 28,30.

Le levier de changement de vitesses 12 comporte, d'une part, un bras moteur ou bras de manoeuvre 12S s'étendant entre l'axe T et l'extrémité de manoeuvre du levier sur laquelle est fixé un pommeau 36, et d'autre part, un bras résistant 12I s'étendant entre l'axe T et l'extrémité résistante du levier portant une rotule 38.

Le bras résistant 12I du levier est relié par une tringlerie de transmission classique 40 à un organe mobile 42 de passage de rapports, formant levier, monté articulé sur la boîte de vitesses.

La tringlerie 40 comporte un câble 44 monté coulissant dans une gaine 46 s'étendant entre deux bagues d'arrêt 48,50 dont l'une est portée par le boîtier 12.

Le câble 44 relie l'organe de passage 42 à un organe 52 de couplage du levier 12 dans lequel est reçue la rotule 38.

La rotule 38 est reliée à l'organe de couplage 52 de manière à actionner l'organe de passage 42 lorsque le levier 12 est déplacé longitudinalement. Par contre, la rotule 38 se déplace librement dans l'organe de couplage 52 lorsque le levier 12 est déplacé transversalement.

Le support 18 comporte une patte transversale 54 reliée par une tringlerie de transmission classique 56 à un organe mobile de sélection formant levier (non représenté sur les figures) articulée sur la boîte de vitesses.

Sur la figure 2, on a représenté différents éléments connus de la tringlerie 56, à savoir une biellette 58, un levier de renvoi 60 et un câble 62 monté coulissant dans une gaine 64.

La tringlerie de transmission 56 permet de coupler le levier 12 à un organe mobile de sélection de rapports (non représenté sur les figures) porté par la boîte de vitesses, lorsque le levier 12 est déplacé transversalement.

Le dispositif de commande 10 comporte de plus des moyens 66 de détection de l'effort exercé sur le levier lors du passage d'un rapport et des moyens 68 d'assistance au passage du rapport actionnés lorsque cet effort atteint ou dépasse un seuil prédéterminé.

Les moyens 66 de détection d'effort comprennent des moyens d'appui du levier 12 compressibles élastiquement sous l'effet des déplacements longitudinaux avant ou arrière de ce levier, et des moyens de détection d'un seuil de compression des moyens d'appui.

Les moyens d'appui comprennent deux butées élastiques annulaires avant 70 et arrière 72 en élastomère, fixées sur le boîtier 14, entre lesquelles est interposé le support 18.

Les butées d'appui 70,72 entourent les pivots 28,30 et une extrémité des paliers 32,34 et sont destinés à coopérer avec deux disques correspondants 74,76, centrés sur l'axe longitudinal L et fixés sur les côtés opposés 24,26 du support 18.

Les moyens de détection de seuil comprennent un contacteur électrique à poussoir 78,80 associé à chaque sens avant ou arrière de déplacement du levier 12, porté par un chapeau correspondant 82,84 fixé sur le boîtier 14. Ces contacteurs 78,80 sont alignés avec les pivots 28,30 et actionnés par les extrémités de ces pivots formant butées-poussoirs, à partir d'un seuil prédéterminé de compression des butées d'appui 70,72.

Les moyens d'assistance 68 comprennent un vérin 86 actionné par des moyens électriques ou fluidiques, pilotés par les contacteurs 78,80.

Le vérin 86 est muni d'une tige 88 de poussée/-traction à l'extrémité libre de laquelle est fixé l'organe de couplage 52, de manière à assister le déplacement de l'extrémité résistante du levier 12 lors du passage d'un rapport de la boîte de vitesses.

De préférence, la tige de poussée/traction 88 est sensiblement alignée avec le câble 44 de transmission.

Le fonctionnement du dispositif de commande de boîte de vitesses représenté aux figures 1 et 2 est très simple.

On sélectionne un rapport de vitesses en faisant pivoter le levier de changement de vitesses 12 autour de l'axe longitudinal L de manière à déplacer le levier transversalement dans un sens ou dans le sens opposé selon le cas.

Après avoir sélectionné un rapport, on passe ce rapport en faisant pivoter le levier de changement de vitesses 12 autour de l'axe transversal T de manière à le déplacer longitudinalement vers l'avant ou vers l'arrière, selon le cas. Le support 18 prend alors appui sur une butée en élastomère correspondante 70,72, ce qui a pour effet de comprimer cette dernière. A partir d'un seuil prédéterminé de compression de la butée 70,72, un pivot correspondant 28,30, qui se déplace solidairement avec le support 18, actionne le contacteur électrique 78,80 qui lui est associé de manière à piloter le vérin 86. Ce dernier pousse ou tire selon le cas la rotule 38 du levier 12 de manière à assister le passage du rapport.

Les contacteurs électriques 78,80 peuvent piloter le vérin 86 suivant un mode binaire, en tout ou rien, ou suivant un mode proportionnel selon lequel l'effort d'assistance fourni par le vérin 86 augmente avec la compression des butées d'appui 70,72.

Dans l'exemple illustré sur les figures 1 et 2, le vérin d'assistance 86 est porté par le boîtier 14 et agit directement sur l'extrémité résistante du levier 12. En variante, le vérin d'assistance 86 peut être agencé sur la boîte de vitesses de manière à agir directement sur l'organe mobile de passage 42. Dans ce cas, la tringlerie de transmission 40 n'est pas soumise aux efforts du vérin d'assistance.

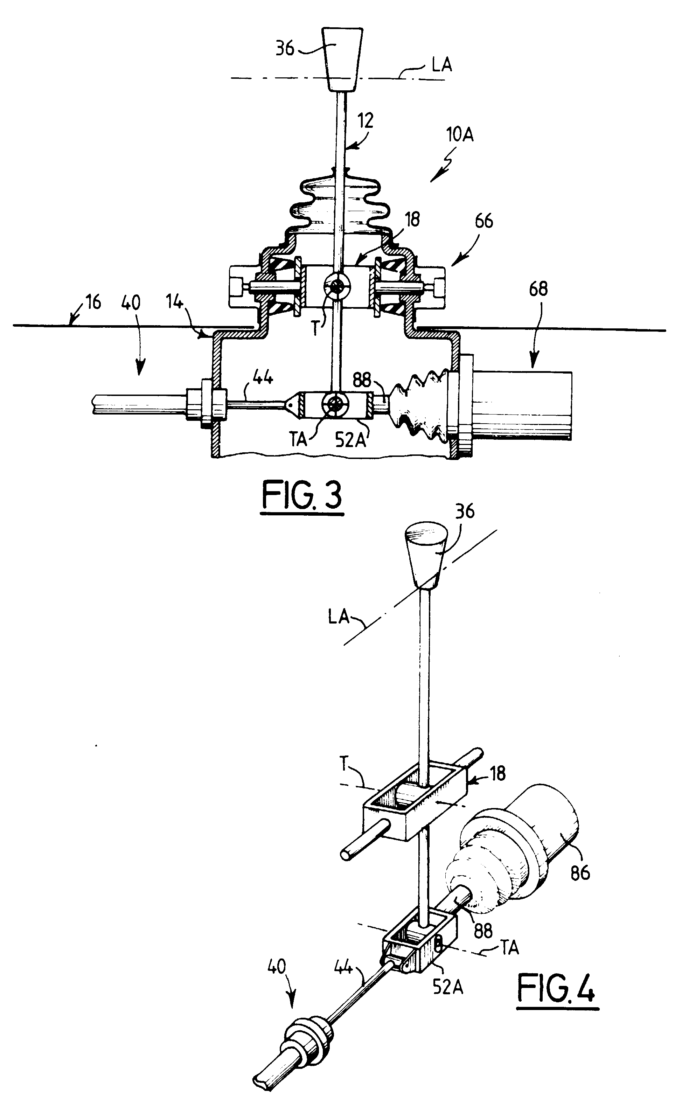

On a représenté sur les figures 3 et 4 un dispositif de commande d'une boîte de vitesses pour véhicule automobile selon un second mode de réalisation de l'invention, désigné par la référence générale 10A.

Sur ces figures, les éléments analogues à ceux des figures précédentes sont désignés par des références identiques.

Dans ce cas, le pommeau 36 est articulé sur l'extrémité de manoeuvre du levier 12 autour d'un axe longitudinal LA. La tringlerie de transmission 56 illustrée sur les figures 1 et 2 est remplacée par des moyens tels que ceux décrits dans FR-A-2 713 564 permettant de sélectionner les rapports de la boîte de vitesses par déplacement transversal du pommeau 36 autour de son axe d'articulation LA.

L'extrémité résistante du levier 12 est articulée sur une chape prismatique 52A autour d'un axe transversal TA, à l'aide de moyens classiques à pivots guidés dans des boutonnières. La chape 52A est portée par la tige de poussée/traction 88 du vérin 86 et reliée au câble 44 de la tringlerie de transmission 40.

Le fonctionnement du dispositif de commande 10A est analogue à celui du dispositif 10, mis à part le fait que la sélection d'un rapport se fait dans ce cas par pivotement du pommeau 36 autour de l'axe LA.

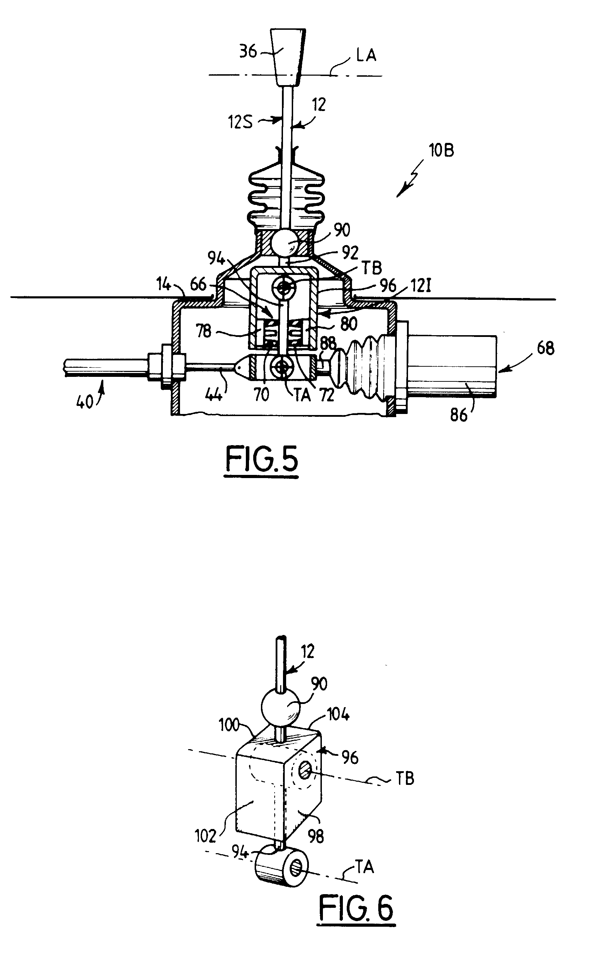

On a représenté sur les figures 5 et 6 un dispositif de commande d'une boîte de vitesses pour véhicule automobile, selon un troisième mode de réalisation de l'invention, désigné par la référence générale 10B.

Dans ce cas, le levier de changement de vitesses 12 est monté sur le boîtier 14 au moyen d'une articulation fixe à rotule 90.

Le bras résistant 12I comporte deux éléments 92,94 articulés entre eux autour d'un axe transversal TB.

Un premier élément 92, relié à la rotule 90, comporte une chape prismatique 96 munie de deux côtés longitudinaux opposés 98,100 d'articulation des éléments 92,94 et deux côtés transversaux 102,104 adjacents aux précédents et comportant les butées d'appui 70,72 et les contacteurs électriques 78,80.

Les butées 70,72 entourent les poussoirs des contacteurs 78,80.

Le second élément 94, en forme de bielle, s'étend à l'intérieur de la chape 96 entre les butées d'appui 70,72.

Chaque contacteur 78,80 est associé à un sens de déplacement longitudinal avant ou arrière du levier 12. Le second élément 94 forme une butée-poussoir d'actionnement des contacteurs 78,80.

La sélection des rapports de la boîte de vitesses se fait par exemple au moyen d'un pommeau articulé 36 similaire à celui du second mode de réalisation décrit précédemment.

L'extrémité du second élément 94 formant l'extrémité résistante du levier 12 est articulée sur une chape prismatique 52A, similaire à celle du second mode de réalisation, reliée au câble 44 et portée par la tige de poussée/traction 88 du vérin 86.

Le passage d'un rapport de la boîte de vitesses se fait en déplaçant longitudinalement le levier 12 vers l'avant ou vers l'arrière selon le cas. La bielle 94 prend alors appui sur une butée en élastomère correspondante 70,72, ce qui a pour effet de comprimer cette dernière. A partir d'un seuil prédéterminé de compression de la butée, la bielle 94 formant butée-poussoir actionne le contacteur électrique 78,80 correspondant de manière à piloter le vérin d'assistance 86 qui assiste le passage du rapport.

L'invention comporte de nombreux avantages.

En particulier, elle permet de réduire l'effort exercé par l'utilisateur sur le levier de changement de vitesses lors du passage d'un rapport de la boîte de vitesses, et/ou de réduire la longueur et la course de ce levier.

Le boîtier 14 sur lequel est articulé le levier de changement de vitesses 12 et qui porte les moyens 66 de détection d'effort et les moyens 68 d'assistance forme un ensemble facile à agencer sur le plancher du véhicule.

## Revendications

1. Dispositif de commande d'une boîte de vitesses pour véhicule automobile, du type comprenant
un levier de changement de vitesses (12) monté articulé sur la caisse du véhicule, déplaçable suivant au moins une direction, dite longitudinale, de passage de rapports de la boîte de vitesses,
des moyens (70,72) d'appui du levier (12) compressibles élastiquement sous l'effet des déplacements longitudinaux avant ou arrière du levier,
des moyens (66) de détection de l'effort exercé par le levier (12) sur les moyens (70,72) d'appui de celui-ci, lors du passage d'un rapport, et
des moyens (68) d'assistance au passage du rapport actionnés lorsque ledit effort atteint ou dépasse un seuil prédéterminé de compression des moyens d'appui (70,72),
les moyens de détection d'effort (66) comprenant des moyens contacteurs électriques (78,80) de pilotage des moyens d'assistance, actionnés à partir du seuil de compression,
**caractérisé en ce que** le levier de changement de vitesses (12) est monté articulé autour d'un axe transversal (T) sur un support (18) monté coulissant longitudinalement sur la caisse du véhicule, les moyens d'appui compressibles comprenant deux butées d'appui (70,72) avant et arrière en élastomère solidaires de la caisse du véhicule, entre lesquelles est interposé le support mobile (18), les moyens contacteurs comprenant un contacteur à poussoir (78,80) associé à chaque sens avant ou arrière de déplacement du levier (12) et solidaire de la caisse, actionné par une butée-poussoir (28,30) correspondante reliée au levier (12).

2. Dispositif selon la revendication 1, caractérisé en ce que le support (18) est monté pivotant autour d'un axe (L) de coulissement longitudinal, de manière que le levier de changement de vitesses (12) soit déplaçable également suivant une direction, dite transversale, de sélection de rapports de la boîte de vitesses.

3. Dispositif selon la revendication 1 ou 2, caractérisé en ce que le support (18) comporte deux pivots longitudinaux avant (28) et arrière (30) montés coulissants sur la caisse du véhicule, les butées d'appui (70,72) étant annulaires et entourant les pivots (28,30), les contacteurs (78,80) étant alignés avec les pivots et actionnés par les extrémités de ces pivots.

4. Dispositif de commande d'une boîte de vitesses pour véhicule automobile, du type comprenant
un levier de changement de vitesses (12) monté articulé sur la caisse du véhicule au moyen d'une articulation fixe (90), le levier étant déplaçable suivant au moins une direction, dite longitudinale, de passage de rapports de la boîte de vitesses,
des moyens (70,72) d'appui du levier (12) compressibles élastiquement sous l'effet des déplacements longitudinaux avant ou arrière du levier,
des moyens (66) de détection de l'effort exercé par le levier (12) sur les moyens (70,72) d'appui de celui-ci, lors du passage d'un rapport, et
des moyens (68) d'assistance au passage du rapport actionnés lorsque ledit effort atteint ou dépasse un seuil prédéterminé de compression des moyens d'appui (70,72),
les moyens de détection d'effort (66) comprenant des moyens contacteurs électriques (78,80) de pilotage des moyens d'assistance, actionnés à partir du seuil de compression,
**caractérisé en ce que** le levier de changement de vitesses (12) comporte un bras résistant (12I), s'étendant entre l'articulation (90) et une extrémité résistante du levier, comprenant deux éléments (92,94) articulés entre eux autour d'un axe transversal (TB), les moyens d'appui compressibles comprenant deux butées d'appui avant et arrière (70,72) en élastomère portées par un premier élément (92), entre lesquelles est interposé le second élément (94), les moyens contacteurs comprenant un contacteur à poussoir (78,80) associé à chaque sens avant ou arrière de déplacement du levier (12), porté par l'un des éléments articulés (92), et actionné par l'autre des éléments articulés (94) formant butée-poussoir.

5. Dispositif selon la revendication 4, caractérisé en ce qu'un premier élément articulé (92) comporte une chape prismatique (96) munie de deux côtés opposés longitudinaux (98,100) d'articulation des éléments (92,94) et de deux côtés transversaux (102,104), adjacents aux précédents, portant les butées d'appui (70,72) et les contacteurs (78,80), les butées d'appui (70,72) étant annulaires et entourant les poussoirs des contacteurs (78,80).

6. Dispositif selon l'une quelconque des revendications précédentes, caractérisé en ce que les moyens d'assistance (68) comprennent un vérin (86) actionné par des moyens électriques ou fluidiques, muni d'une tige de poussée/traction (88) reliée à l'extrémité résistante du levier (12).

7. Dispositif selon l'une quelconque des revendications précédentes, caractérisé en ce que le levier de changement de vitesses (12) est articulé sur un boîtier (14) fixé sur la caisse du véhicule et portant les moyens de détection d'effort (66) et les moyens d'assistance (68).

## Patentansprüche

1. Schaltvorrichtung für das Getriebe eines Kraftfahrzeuges, die folgendes aufweist
einen an der Karosserie des Fahrzeuges angelenkten Gangschalthebel (12), welcher für das Einlegen der Gänge des Getriebes in mindestens einer Richtung, der sogenannten Längsrichtung, beweglich ist,
Mittel (70, 72) für die Lagerung des Hebels (12), welche unter der Wirkung der Längsverschiebungen in vorderer oder rückwärtiger Richtung des Hebels elastisch komprimiert werden können,
Kraftaufnehmer (66) für die Messung der Kraft, welche von dem Hebel (12) auf sein Auflager (70, 72) beim Einlegen eines Ganges ausgeübt wird, und einen Servomechanismus (68) für das Einlegen eines Ganges, der aktiviert wird, wenn die ausgeübte Kraft einen bestimmten Schwellenwert der Kompression des Auflagers (70, 72) erreicht hat oder übersteigt,
wobei der Kraftaufnehmer (66) elektrische Mitnehmerkontakte (78, 80) für die Steuerung des Servomechanismus aufweist, die bei Erreichen des Schwellenwertes der Kompression aktiviert werden,
**dadurch gekennzeichnet, daß**
der Gangschalthebel (12) um eine Querachse (T) auf einer Halterung (18) angelenkt ist, die in Längsrichtung gleitend an der Karosserie des Fahrzeugs montiert ist, wobei die komprimierbaren Auflager ein Paar vordere und hintere Auflager (70, 72) aus Elastomer aufweisen, die fest mit der Karosserie des Fahrzeuges verbunden sind und zwischen denen die bewegliche Halterung (18) montiert ist, wobei die Kontakte einen Mitnehmerkontakt (78, 80) aufweisen, der jeweils der vorderen und hinteren Verschiebungsrichtung des Hebels (12) zugeordnet und fest an der Karosserie montiert ist und von einem entsprechenden mit dem Hebel (12) verbundenen Mitnehmer (28, 30) aktiviert wird.

2. Vorrichtung nach Anspruch 1,
**dadurch gekennzeichnet, daß**
die Halterung (18) drehbar um eine Gleitachse (L) in Längsrichtung so montiert ist, daß der Gangschalthebel (12) ebenfalls in einer sogenannten Querrichtung für die Auswahl der Gänge des Getriebes beweglich ist

3. Vorrichtung nach einem der Ansprüche 1 oder 2,
**dadurch gekennzeichnet, daß**
die Halterung (18) ein Paar vordere (28) und hintere (30) längliche Gelenkzapfen aufweist, welche gleitend an der Karosserie des Fahrzeugs montiert sind, wobei die Auflager (70, 72) ringförmig ausgebildet sind und die Gelenkzapfen (28, 30) umranden, und die Mitnehmerkontakte (78, 80) mit den Gelenkzapfen ausgerichtet sind und durch die Endabschnitte dieser Gelenkzapfen aktiviert werden.

4. Vorrichtung für die Betätigung eines Getriebes in einem Kraftfahrzeug, die folgendes aufweist
einen Gangschalthebel (12), welcher an der Karosserie des Fahrzeugs mittels eines festen Gelenkes (90) angelenkt ist, wobei der Hebel in mindestens einer Richtung, der sogenannten Längsrichtung, für das Einlegen der Gänge des Getriebes beweglich ist,
Mittel (70, 72) für die Lagerung des Hebels (12), welche unter der Wirkung der Längsverschiebungen in vorderer oder rückwärtiger Richtung des Hebels elastisch komprimiert werden können ,
einen Kraftaufnehmer (66) für die Kraft, welche von dem Hebel (12) auf sein Auflager (70, 72) beim Einlegen eines Ganges ausgeübt wird, und
einen Servomechanismus (68) für das Einlegen eines Ganges, der aktiviert wird, wenn diese Kraft einen bestimmten Schwellenwert der Kompression des Auflagers (70, 72) erreicht hat oder übersteigt,
wobei der Kraftaufnehmer (66) elektrische Mitnehmerkontakte (78, 80) für die Steuerung des Servomechanismus aufweist, die bei Erreichen des Schwellenwertes der Kompression aktiviert werden,
**dadurch gekennzeichnet, daß**
der Gangschalthebel (12) einen resistenten Arm (12I) aufweist, welcher zwischen dem Gelenk (90) und einem resistenten Ende des Hebels verläuft und zwei um eine Querachse (TB) angelenkte Elemente (92, 94) enthält, wobei die komprimierbaren Auflager ein Paar vordere und hintere Auflager (70, 72) aus Elastomer aufweisen, welche von einem ersten Element (92) getragen werden und zwischen denen das zweite Element (94) angeordnet ist, und die Kontakte einen Mitnehmerkontakt (78, 80) enthalten, welcher jeweils der Verschiebung des Hebels (12) in vorderer oder rückwärtiger Richtung zugeordnet ist und durch das andere angelenkte Element (94), welches das Widerlager bildet, aktiviert wird.

5. Vorrichtung nach Anspruch 4,
**dadurch gekennzeichnet, daß**
ein erstes angelenktes Element (92) eine prismatische Abdeckkappe (96) aufweist, welche mit zwei gegenüberliegenden Längsseiten (98, 100) der Anlenkung der Elemente (92, 94) und mit zwei daran anschließenden Querseiten ausgestattet ist, welche die Auflager (70, 72) und die Mitnehmerkontakte (78, 80) tragen, wobei die Auflager (70, 72) ringförmig ausgebildet sind und die Mitnehmerkontakte (78, 80) umranden.

6. Vorrichtung nach einem der vorausgegangenen Ansprüche,
**dadurch gekennzeichnet, daß**
der Servomechanismus (68) ein Stellglied (86) aufweist, welches durch elektrische oder fluide Mittel aktiviert wird, die mit einer Mitnehmer/Zugstange (88) ausgerüstet sind, welche an das resistente Ende des Hebels (12) angeschlossen ist.

7. Vorrichtung nach einem der vorausgegangenen Ansprüche,
**dadurch gekennzeichnet, daß**
der Gangschalthebel (12) an einem Gehäuse (14) angelenkt ist, welches an der Karosserie des Fahrzeugs befestigt ist und den Kraftaufnehmer (66) und den Servomechanismus (68) trägt.

## Claims

1. Device for controlling a gearbox for an automobile of the type comprising
a gear change lever (12) mounted to articulate on the body of the vehicle, and displaceable in at least one direction, termed longitudinal, for changes of speed of the gearbox,
means (70,72) of supporting the lever (12) which are elastically compressible under the effect of the longitudinal forward or rear displacement of the lever,
means (66) of detecting the effort exerted by the lever (12) on the support means (70,72) thereof, during change of speed, and
means (68) of assisting the change of speed actuated when the said effort reaches or exceeds a predetermined compression threshold of the support means (70,72),
means of detecting the effort (66) comprising electrical contactor means (78,80) for controlling the assisting means, actuated from a compression threshold,
characterised in that the gear change lever (12) is mounted to articulate around a transverse axis (T) on a support (18) mounted to slide longitudinally on the body of the vehicle, the compressible support means comprising two support stop means (70,72), forward and reverse, made of elastomer and integral with the body of the vehicle, between which there is interposed the mobile support, (18), the contactor means comprising a thrust contactor (78,80) associated with each forward or reverse displacement direction of the lever (12) and integral with the body, actuated by a corresponding thrust stop means (28,30) connected to the lever (12).

2. Device according to claim 1, characterised in that the support (18) is mounted to pivot about a longitudinal sliding axis (L), so that the gear change lever (12) is displaceable equally in a direction, termed transverse, for selection of the speeds of the gearbox.

3. Device according to claim 1 or 2, characterised in that the support (18) comprises two longitudinal forward (28) and reverse (30) pivots, mounted to slide on the body of the vehicle, the stop support means (70,72) being annular and surrounding the pivots (28,30), the contactors (78,80) being aligned with the pivots and actuated by the ends of these pivots.

4. Device for controlling a gearbox for an automobile of the type comprising
a gear change lever (12) mounted to articulate on the body of the vehicle by means of a fixed joint (90), the lever being displaceable in at least one direction, termed longitudinal, for changes of speed of the gearbox,
means (70,72) of supporting the lever (12) which are elastically compressible under the effect of the longitudinal forward or rear displacement of the lever, means (66) of detecting the effort exerted by the lever (12) on the support means (70,72) thereof, during change of speed, and
means (68) of assisting the change of speed actuated when the said effort reaches or exceeds a predetermined compression threshold of the support means (70,72),
means of detecting the effort (66) comprising electrical contactor means (78,80) for controlling the assisting means, actuated from a compression threshold,
characterised in that the gear change lever (12) comprises a resistant arm (12I), extending between the joint (90) and one resistant end of the lever, comprising two members (92,94) articulated between themselves about a transverse axis (TV), the compressible support means comprising two forward and reverse stop support means (70,72) made of elastomer and carried by a first member (92), between which there is interposed the second element (94), the contactor means comprising a thrust contactor (78,80) associated with each forward or reverse direction of displacement of the lever (12), carried by one of the articulated elements (92), and actuated by the other of the articulated elements (94) forming the thrust stop means.

5. Device according to claim 4, characterised in that a first articulated member (92) comprising a prismatic link (96) equipped with two opposed longitudinal sides (98,100) for articulation of the elements (92,94) and two transverse sides (102,104), adjacent or precedent, carrying the support stop means (70,72) and the contactors (78,80), the support stop means (70,72) being annular and surrounding the thrust means of the contactors (78,80).

6. Device according to any one of the preceding claims, characterised in that the means of assistance (68) comprise a jack (86) actuated by electrical or fluid means, equipped with a thrust/traction tappet (88) connected to the resistant end of the lever (12).

7. Device according to any one of the preceding claims, characterised in that the gear change lever (12) is articulated on a casing (14) fixed to the body of the vehicle and carrying the means of detecting effort (66) and the means of assistance (68).
